# EUROPÄISCHE PATENTSCHRIFT

(11) **EP 2 665 536 B1**
(45) Veröffentlichungstag und Bekanntmachung des Hinweises auf die Patenterteilung: **29.08.2018**
(21) Anmeldenummer: 11805422.0
(22) Anmeldetag: 22.12.2011
(51) Int. Cl.: B01D 36/00

(54) **FILTERVORRICHTUNG**
FILTER DEVICE
DISPOSITIF FILTRANT

(30) Priorität: 19.01.2011 DE 102011008811
(43) Veröffentlichungstag der Anmeldung: 27.11.2013
(73) Patentinhaber: Hydac Filtertechnik GmbH, 66280 Sulzbach/Saar (DE)
(72) Erfinder: DEWES, Markus, 66649 Oberthal (DE); EBERLE, Richard, 66399 Ormesheim (DE); KREIBIG, Micha, 66780 Rehlingen-Siersburg (DE)
(74) Vertreter: Bartels und Partner, Patentanwälte
(86) Internationale Anmeldenummer: PCT/EP2011/006508
(87) Internationale Veröffentlichungsnummer: WO 2012/097851

(56) Entgegenhaltungen:
- EP-A1- 0 880 987
- WO-A1-02/06662
- WO-A1-95/09037
- WO-A1-98/19770
- DE-T2- 3 877 178
- US-A- 4 372 847
- US-A1- 2005 023 209
- US-A1- 2007 062 860

## Beschreibung

Die Erfindung betrifft eine Filtervorrichtung, insbesondere für mit Wasserbeimengungen belastete Fluide, wie Dieselöl, mit den Merkmalen im Oberbegriff von Anspruch 1.

Filtervorrichtungen der oben genannten Art sind Stand der Technik. Sie werden beispielsweise bei Kraftstoffsystemen für Verbrennungsmotoren eingesetzt, um empfindliche Komponenten, insbesondere Einspritzsysteme, gegen Beeinträchtigungen durch im Kraftstoff mitgeführte Wasseranteile zu schützen. Die Abscheidung von im Kraftstoff mitgeführten Wasseranteilen kann hierbei durch einen Koagulationsprozess bewirkt werden, bei dem an dem Filtermedium Wassertröpfchen gebildet werden, die aus einem am Filterelement gebildeten Abscheideraum zur Wassersammeleinrichtung abfließen können.

Für den störungsfreien Betrieb der über die Filtervorrichtung zu versorgenden Systeme, insbesondere empfindlicher Einspritzsysteme, ist es sehr wichtig, dass nicht nur Schmutzstoffe zurückgehalten werden, sondern dass insbesondere auch die Wasserabscheidung hoch effizient und zuverlässig erfolgt. Voraussetzung hierfür ist, dass unter allen Betriebsbedingungen die gesamte Filterfläche voll zur Wirkung kommt. Bei Kraftstoffsystemen, wo an dem Filtermedium der als Saugfilter betriebenen Filtervorrichtung geringe Druckdifferenzen anstehen, können sich Betriebszustände ergeben, bei denen sich im Filtergehäuse die Füllstandshöhe des Fluids nicht über die gesamte Höhe des Filtermediums erstreckt. Bei so nicht vollständig entlüftetem Filtergehäuse durchströmt das Fluid nur den unteren Teil des Filtermediums, d.h. ein größerer Teil der Filterfläche bleibt ungenutzt und "trocken". In nachteiliger Weise ist daher die Effizienz der Wasserabscheidung verschlechtert, was wiederum den sicheren Betrieb nachgeordneter Systeme gefährdet.

Die WO 98/19770 A1 beschreibt eine Filtervorrichtung für mit Wasserbeimengungen belastete Fluide, wie Dieselöl, mit einem Filtergehäuse, das einen Fluideingang und einen Fluidausgang für abgereinigtes Fluid in Form des Dieselöls aufweist und in dem mindestens ein Filterelement aufnehmbar ist, das beim Filtervorgang im Filtergehäuse mit seiner wirksamen Filterfläche eine Rohseite von einer Reinseite trennt, wobei während des Filterbetriebes sich jeweils eine Füllstandshöhe des Fluids innerhalb des Filtergehäuses einstellt, die ein Fluidvolumen begrenzt, in das das Filterelement eintaucht, wobei dem Fluidausgang an einem unteren Ende eines Gehäusehauptteiles des Filtergehäuses eine Barriereeinrichtung derart vorgeschaltet ist, dass es zu einer Vergrößerung der Füllstandshöhe im Gehäuse kommt, so dass das im Fluidvolumen eintauchende Filterelement über eine vergrößerte Filterfläche von dem Fluid durchströmbar ist.

Durch US 4,372,847 A ist eine gattungsgemäße Filtervorrichtung für mit Wasserbeimengungen belastete Fluide, wie Dieselöle, bekannt, mit einem Filtergehäuse, das ein Gehäusehauptteil und ein Deckelteil sowie einen Fluideingang und einen Fluidausgang für abgereinigtes Fluid aufweist und in dem mindestens ein Filterelement mit einer unteren und einer oberen Endkappe aufnehmbar ist, das beim Filtervorgang im Filtergehäuse mit seiner wirksamen Filterfläche eine Rohseite von einer Reinseite trennt, wobei mittels der unteren Endkappe das Filterelement an einer Elementaufnahme des Filtergehäuses festlegbar ist, wobei während des Filterbetriebes sich jeweils eine Füllstandshöhe des Fluids innerhalb des Filtergehäuses einstellt, die ein Fluidvolumen begrenzt, in das das Filterelement eintaucht, wobei ein Filtermedium des Filterelements beim Filtriervorgang von der äußeren Rohseite her zum inneren, die Reinseite bildenden Filterhohlraum hindurch strömbar ist, wobei dem Fluidausgang an einem unteren Ende des Gehäusehauptteiles des Filtergehäuses eine Barriereeinrichtung derart vorgeschaltet ist, dass es zu einer Vergrößerung der Füllstandshöhe im Gehäuse kommt, so dass das im Fluidvolumen eintauchende Filterelement über eine vergrößerte Filterfläche von dem Fluid durchströmbar ist, wobei die Barriereeinrichtung ein mit dem Fluidausgang in Verbindung stehendes Rohr aufweist, dessen Öffnung bei einer durch die Position der Öffnung vorgegebenen Füllstandshöhe vom Fluid überströmbar ist, wobei die Barriereeinrichtung im Filterhohlraum des Filterelementes angeordnet ist, in dem zwischen dem für ein Dieselöl mitgeführtes Wasser koagulierend wirkenden Filtermedium und dem Rohr ein hydrophobes Sieb derart angeordnet ist, dass zwischen diesem und dem Filtermedium ein Abscheideraum gebildet ist, aus dem heraus Wasser, das durch Koaleszenz abgeschieden ist, durch einen Durchgang der Endkappe hindurch zu einem Wassersammelraum abfließt.

US 2007/0062860 A1 offenbart eine Separatorvorrichtung mit einem Separatorgehäuse, das einen Fluidausgang für von Wasser befreitem Fluid aufweist und in dem mindestens ein Separatorelement aufnehmbar ist, das mit seiner wirksamen Separatorfläche eine Rohseite von einer Reinseite trennt. Während des Entwässerungsbetriebes stellt sich innerhalb des Separatorgehäuses eine Füllstandshöhe für das Fluid ein, in das das Separatorelement eintaucht. Innerhalb des Separatorelementes ist ein eingewickeltes, perforiertes Rohr angeordnet, das als Strömungssteuerungsvorrichtung oder Barriereeinrichtung dient, so dass es dergestalt zu einer Vergrößerung der Füllstandshöhe im Separatorgehäuse kommen kann.

Weitere Filtervorrichtungen gehen aus der WO 95/09037 A1, der US 2005/0023209 A1 und der DE 38 77 178 T2 hervor.

Ausgehend von dieser Problematik stellt sich die Erfindung die Aufgabe, eine Filtervorrichtung der in Betracht stehenden Art zu schaffen, die sich durch verbesserte Betriebssicherheit auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die Barriereeinrichtung Bestandteil des im Gehäuse aufnehmbaren Filterelementes ist und dass das Filterelement in seiner Funktionsposition sich mit seiner oberen Endkappe am Deckelteil des Filtergehäuses abstützt.

Dem Fluidausgang des Filtergehäuses ist die Barriereeinrichtung derart vorgeschaltet, dass es im Gehäuse zu einer Vergrößerung der Füllstandshöhe kommt. Dadurch ist sichergestellt, dass das im Fluidvolumen eintauchende Filterelement über eine entsprechend große Filterfläche vom Fluid durchströmbar ist, dass also das gesamte Filtermedium für den Abreinigungs- und Abscheidevorgang nutzbar wird. Die erstrebte hohe Effizienz der Wasserabscheidung ist dadurch gewährleistet.

Dadurch, dass durch die dem Fluidausgang vorgeschaltete Barriereeinrichtung ein Fluidpegel im Filtergehäuse vorgegeben ist, resultiert der weitere Vorteil, dass Fluideingang und Fluidausgang am Filtergehäuse entsprechend den baulichen Gegebenheiten am jeweiligen Einsatzort frei gewählt werden können, weil die Effizienz der Filtrations- und Abscheidewirkung unbeeinträchtigt bleibt, auch wenn der Fluidausgang wesentlich tiefer gelegen ist als das obere Ende des Filtermediums des Filterelements.

Die Barriereeinrichtung weist ein mit dem Fluidausgang in Verbindung stehendes Rohr auf, dessen Öffnung bei einer durch die Position der Öffnung vorgegebenen Füllstandshöhe vom Fluid überströmbar ist. Auf konstruktiv besonders einfache Weise ist dadurch die Barriereeinrichtung durch ein Überlaufrohr verwirklicht, wobei die Rohröffnung die Pegelhöhe des Fluids vorgibt.

Wenn ein Rohr in Form eines perforierten Rohres oder eines Membranrohres vorgesehen ist, kann durch eine entsprechend feine Perforierung oder leichte Durchlässigkeit der Membran bewirkt werden, dass bei im Betrieb herrschendem Volumenstrom die Überlauffunktion des Rohres zur Bestimmung der Pegelhöhe wirksam ist, dass jedoch das Rohr selbst kein vollständiges Sperrelement bildet, sondern für entsprechend sehr geringe Fluidmengen eine Durchtrittsmöglichkeit zum Fluidausgang bietet.

Wenn es sich um ein Filterelement handelt, dessen Filtermedium beim Filtriervorgang von der äußeren Rohrseite her zum inneren, die Reinseite bildenden Filterhohlraum hin durchströmbar ist, ist die Barriereeinrichtung im Filterhohlraum des Filterelementes angeordnet.

Die Filterelemente, die eine das Filtermedium einfassende Endkappe aufweisen, mit der das Filterelement an einer Elementaufnahme des Filtergehäuses festlegbar ist, sind in ihrer Anordnung mit besonderem Vorteil so getroffen, dass die Endkappe einen den Filterhohlraum zum Fluidausgang hin fortsetzenden Fluidraum in Form eines zentralen, zur Achse des Filterhohlraums koaxialen Hohlzylinders bildet, der durch das sich im Filterhohlraum koaxial zur Hochachse erstreckende Rohr verlängert ist, das mit dem Fluidraum dichtend in Verbindung ist. Die Barriereeinrichtung ist dadurch auf besonders einfache Weise durch ein inneres Steigrohr des Filterelements verwirklicht.

Im Filterhohlraum ist zwischen dem für von Dieselöl mitgeführtem Wasser koagulierend wirkenden Filtermedium und dem Rohr ein hydrophobes Sieb derart angeordnet, dass zwischen diesem und dem Filtermedium ein Abscheideraum gebildet ist, aus dem heraus Wasser, das durch Koaleszenz abgeschieden ist, durch einen Durchgang der Endkappe hindurch zu einem Wassersammelraum abfließt. Dank des erfindungsgemäß im Filtergehäuse vorgegebenen Füllstands taucht auch das hydrophobe Sieb praktisch vollflächig in das Fluidvolumen ein. Bei der Erfindung wird daher nicht nur die volle Filterfläche des Filtermediums zum Koalisieren und Filtrieren komplett genutzt, sondern es steht auch die gesamte Fläche des hydrophoben Siebes für eine wasserabscheidende Funktion zur Verfügung, was zu einer weiter verbesserten Effizienz der Wasserabscheidung führt.

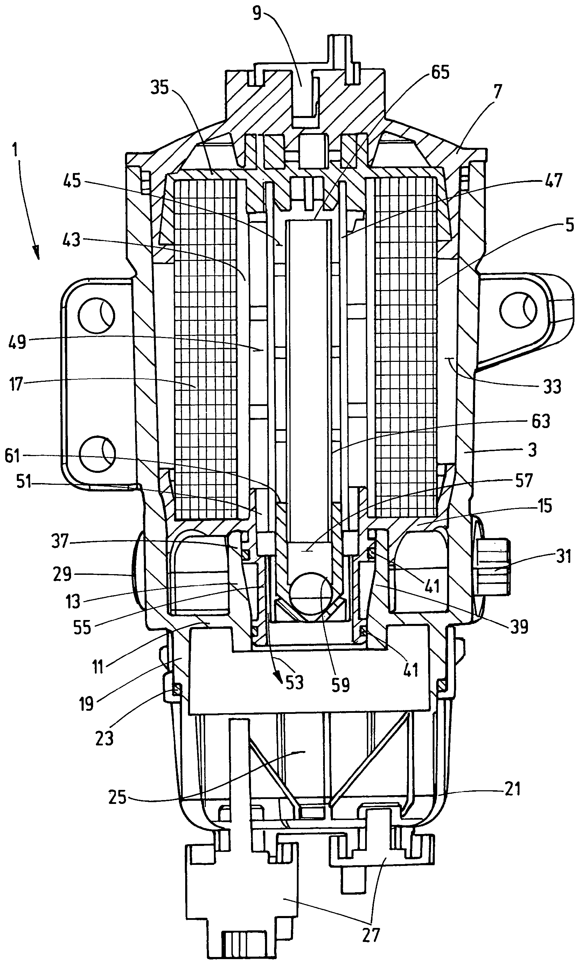

Nachstehend ist die Erfindung anhand eines in der Zeichnung dargestellten Ausführungsbeispiels im Einzelnen erläutert. Die einzige Figur zeigt einen leicht schematisch vereinfacht gezeichneten Längsschnitt des Ausführungsbeispiels der Erfindung.

Die Figur zeigt ein Ausführungsbeispiel der Erfindung in Form eines Kraftstofffilters für mit Wasser beladenes Dieselöl, mit einem Filtergehäuse 1 mit einem im großen Ganzen hohlzylindrischen Gehäusehauptteil 3 für die Aufnahme eines Filterelementes 5. Das Hauptteil 3 ist am oberen Ende durch ein Deckelteil 7 dichtend abgeschlossen, an dessen oberem Zentralbereich sich eine Be- und Entlüftungsanordnung 9 von bei derartigen Vorrichtungen üblicher Bauart befindet. Das Gehäusehauptteil 3 ist an dem dem Deckelteil 7 entgegengesetzten Ende durch eine Querwand 11 abgeschlossen, die in ihrem Zentralbereich eine Elementaufnahme 13 bildet, in der das Filterelement 5 mit seiner unteren Endkappe 15 festlegbar ist, die für den unteren Rand des Filtermediums 17 des Filterelementes 5 eine Einfassung bildet. Von der Querwand 11 erstreckt sich ein Ringkörper 19 nach unten, an dem ein den unteren Abschluss des Filtergehäuses 1 bildendes, schalenförmiges Bodenteil 21 angebracht ist, wobei ein Dichtelement 23 schalenförmiges Bodenteil 21 angebracht ist, wobei ein Dichtelement 23 eine Abdichtung am Ringkörper 19 bildet. Das schalenförmige Bodenteil 21 dient als Wassersammelraum 25 für beim Filtriervorgang abgeschiedenes Wasser, das über Ablasseinrichtungen 27 abgelassen werden kann.

Das Filtergehäuse 1 weist am unteren Ende des Gehäusehauptteils 3 einen Fluidausgang 29 und einen Fluidausgang 31 für abgereinigtes Dieselöl auf. Ein nicht dargestellter Fluideingang weist, was bei der in der Figur gezeigten Drehposition des Gehäuses 1 nicht sichtbar ist, eine Fluidverbindung zur Außenseite des im Gehäuse 1 befindlichen Filterelementes 5 auf, dessen Filtermedium 17 somit beim Filtriervorgang von außen nach innen durchströmt ist, so dass der Raum zwischen Filtermedium 17 und Gehäusewand die Rohseite 33 bildet. Das im Gehäusehauptteil 3 in Funktionsposition befindliche Filterelement 5 weist an dem der unteren Endkappe 15 entgegengesetzten oberen Ende eine obere Endkappe 35 auf, die am Deckelteil 7 abgestützt ist. Beide Endkappen 15 und 35 sind aus Kunststoff einstückig pressgeformt. Für die Festlegung des Filterelementes 5 mit der unteren Endkappe 15 an der Elementaufnahme 13 weist diese einen Aufnahmestutzen 37 auf, der in Form eines Ringkörpers, koaxial zur Vorrichtungsachse, aus dem Zentralbereich der Querwand 11 nach oben in den Gehäusehauptteil 3 vorspringt. Mit seiner nach oben divergierenden Innenwand bildet der Aufnahmestutzen 37 den Sitz für einen von der Endkappe 15 koaxial nach unten vorspringenden Anschlussstutzen 39, der über Dichtelemente 41 gegenüber dem Aufnahmestutzen 37 abgedichtet ist.

Das Filtermedium 17 des Filterelementes 5 umgibt ein fluiddurchlässiges Stützrohr 43, das sich von unterer Endkappe 15 zu oberer Endkappe 35 erstreckt und so den inneren Filterhohlraum 45 umgibt, der beim Filtervorgang die Reinseite bildet. In einem radialen Abstand nach innen versetzt erstreckt sich ein hydrophobes Sieb 47 ebenfalls von unterer Endkappe 15 zu oberer Endkappe 35. Zwischen diesem für Wassertropfen undurchlässigen Sieb 47 und dem Stützrohr 43 ist so ein Wasser-Abscheideraum 49 gebildet. Durch Koaleszenz am Filtermedium 17 abgeschiedene Wassertröpfchen und bei einem gegebenenfalls eine koalisierende Beschichtung aufweisenden hydrophoben Sieb 47 daran abgeschiedene Wassertröpfchen können im Abscheideraum 49 nach unten sinken. Wie aus der Figur ersichtlich, weist die Elementaufnahme 13 zwischen Stützrohr 43 und Sieb 47 einen Durchgang 51 auf, über den das abgeschiedene Wasser, wie mit Pfeil 53 angedeutet, zum Sammelraum 25 abfließt.

Für den Ausstrom des abgereinigten und wasserfreien Dieselöles aus dem radial innerhalb des hydrophoben Siebes 47 befindlichen Raum 45 weist die untere Endkappe 15 des Filterelementes 5 einen zentral gelegenen Einsatz 55 auf, der einen Fluidraum 57 in Form eines Hohlzylinders bildet, in den ein Kraftstoff-Ausgangskanal 59 mündet, der mit dem Gehäuseausgang 31 in Fluidverbindung ist. An das obere Ende 61 des Einsatzes 55 schließt sich außenseitig das hydrophobe Sieb 47 an, während sich innenseitig im Bereich des oberen Endes 61 an den Einsatz 55 ein die Barriereeinrichtung bildendes Rohr 63 anschließt. Das Rohr 63 bildet eine abgedichtete Fortsetzung des Fluidraums 57 und erstreckt sich innerhalb des die Reinseite bildenden Filterhohlraumes 45 koaxial und zentral bis kurz vor die obere Endkappe 35. Das Rohr 63 bildet so ein Steigrohr oder Überlaufrohr, wobei die Position der Rohröffnung 65, die von dem abgereinigten Dieselöl überströmt werden muss, um zur Kanalmündung 59 und damit zum Gehäuseausgang 31 zu gelangen, die Füllstandshöhe innerhalb des Filtergehäuses 1 vorgibt.

Das Rohr 63 gibt als Steig- oder Überlaufrohr nicht nur die Pegelhöhe des Fluids im Gehäuse 1 vor, sondern bewirkt, dass die Vorrichtung selbstentlüftend arbeitet. Weil bei einem Anfahren der Filtervorrichtung das gesamte Volumen des Innenraums, abgesehen vom geringen Volumen des Rohres 63 und des Fluidraums 57, befüllt wird, bevor Fluid durch Überströmen des Rohres 63 austritt, wird praktisch das gesamte enthaltene Luftvolumen verdrängt und kann über die Be- und Entlüftungsanordnung entweichen.

## Patentansprüche

1. Filtervorrichtung für mit Wasserbeimengungen belastete Fluide, wie Dieselöl, mit einem Filtergehäuse (1), das ein Gehäusehauptteil (3) und ein Deckelteil (7) sowie einen Fluideingang und einen Fluidausgang (29, 31) für abgereinigtes Fluid aufweist und in dem mindestens ein Filterelement (5) mit einer unteren (15) und einer oberen Endkappe (35) aufnehmbar ist, das beim Filtervorgang im Filtergehäuse (1) mit seiner wirksamen Filterfläche eine Rohseite (33) von einer Reinseite (45) trennt, wobei mittels der unteren Endkappe (15) das Filterelement (5) an einer Elementaufnahme (13) des Filtergehäuses (1) festlegbar ist, wobei während des Filterbetriebes sich jeweils eine Füllstandshöhe des Fluids innerhalb des Filtergehäuses (1) einstellt, die ein Fluidvolumen begrenzt, in das das Filterelement (5) eintaucht, wobei ein Filtermedium (17) des Filterelements (5) beim Filtriervorgang von der äußeren Rohseite (33) her zum inneren, die Reinseite bildenden Filterhohlraum (45) hindurch strömbar ist, wobei dem Fluidausgang (29, 31) an einem unteren Endes des Gehäusehauptteiles (3) des Filtergehäuses (1) eine Barriereeinrichtung (63) derart vorgeschaltet ist, dass es zu einer Vergrößerung der Füllstandshöhe im Gehäuse (1) kommt, so dass das im Fluidvolumen eintauchende Filterelement (5) über eine vergrößerte Filterfläche von dem Fluid durchströmbar ist, wobei die Barriereeinrichtung ein mit dem Fluidausgang (29, 31) in Verbindung stehendes Rohr (63) aufweist, dessen Öffnung (65) bei einer durch die Position der Öffnung (65) vorgegebenen Füllstandshöhe vom Fluid überströmbar ist, wobei die Barriereeinrichtung (63) im Filterhohlraum (45) des Filterelementes (5) angeordnet ist, in dem (45) zwischen dem für von Dieselöl mitgeführtes Wasser koagulierend wirkenden Filtermedium (17) und dem Rohr (63) ein hydrophobes Sieb (47) derart angeordnet ist, dass zwischen diesem und dem Filtermedium (17) ein Abscheideraum (49) gebildet ist, aus dem heraus Wasser, das durch Koaleszenz abgeschieden ist, durch einen Durchgang (51) der Endkappe hindurch zu einem Wassersammelraum (25) abfließt, **dadurch gekennzeichnet, dass** die Barriereeinrichtung (63) Bestandteil des im Gehäuse (1) aufnehmbaren Filterelementes (5) ist und dass das Filterelement (5) in seiner Funktionsposition sich mit seiner oberen Endkappe (35) am Deckelteil (7) abstützt.

2. Filtervorrichtung nach Anspruch 1, **dadurch gekennzeichnet, dass** ein Rohr (63) in Form eines perforierten Rohres oder eines Membranrohres vorgesehen ist.

3. Filtervorrichtung nach Anspruch 1 oder 2, **dadurch gekennzeichnet, dass** die Endkappe (15) einen den Filterhohlraum (45) zum Fluidausgang (31) hin fortsetzenden Fluidraum (57) in Form eines zentralen, zur Achse des Filterhohlraumes (45) koaxialen Hohlzylinders bildet, der durch das sich im Filterhohlraum (45) koaxial zur Hochachse erstreckende Rohr (63) verlängert ist, das mit dem Fluidraum (57) dichtend in Verbindung ist.

4. Filtervorrichtung nach einem der vorstehenden Ansprüche, **dadurch gekennzeichnet, dass** sich das Rohr (63) in einem Abstand von der Innenseite des hydrophoben Siebes (47) bis zum Bereich des oberen Endes des Filtermediums (17) erstreckt.

## Claims

1. Filter device for fluids contaminated with water additions, such as diesel oil, with a filter housing (1), that comprises a housing body part (3) and a cover part (7) as well as a fluid inlet and a fluid outlet (29, 31) for uncontaminated fluid, and in which at least one filter element (5) with a lower (15) and an upper end cap (35) can be accommodated, that during the filtration procedure in the filter housing (1) with its effective filter area, a contaminated side (33) separates from an uncontaminated side (45), wherein the filter element (5) can be fixed to an element mounting (13) of the filter housing (1) by means of the lower end cap (15), wherein, during the filtration operation, a filling level of the fluid within the filter housing (1) is adjusted, which limits a fluid level in which the filter element (5) is immersed, wherein flow can take place during the filtration procedure though a filter medium (17) of the filter element (5) from the outer contaminated side (33) to the inner, filter cavity (45) forming the uncontaminated side, wherein a barrier device (63) is positioned upstream of the fluid outlet (29, 31) at one end of the housing body part (3) of the filter housing (1), such that there is an increase in the filling level in the filter housing(1), so that the filter element (5) immersed in the volume of fluid has an enlarged filter area though which fluid flows, wherein the barrier device has a tube (63) connecting to the fluid outlet (29, 31), over the opening (65) of which fluid can flow at a given filling level, wherein the barrier device (63) is arranged in the filter cavity (45) of the filter element (5), in which (45) a hydrophobic sieve (47) is arranged between the filter medium (17) acting to coagulate water with the diesel oil (17) and the tube (63), so that a separator chamber (49) is formed between this and the filter medium (17), from which water which has separated by coalescence drains flows through a passage (51) of the end cap to a collection chamber (25), **characterised in that** the barrier device (63) is a component of the filter element (5) mountable in the housing (1) and that the filter element (5) is supported in its functional position with its upper end cap (35) on the cover part (7).

2. Filter device in accordance with claim 1, **characterised in that** a tube (63) is provided in the form of a perforated tube or a membrane tube.

3. Filter device in accordance with claim 1 or 2, **characterised in that** the end cap (15) forms a fluid chamber (57) continuing to the fluid outlet (31) in the form of a central hollow cylinder, coaxial to the axis of the filter cavity (45), which is extended in the filter cavity (45) coaxially to the tube (63) extending coaxially to the vertical axis, that has a sealing connection to the fluid chamber (57).

4. Filter device in accordance with one of the preceding claims, **characterised in that** the tube (63) extends at a distance from the inside of the hydrophobic sieve (47) to the region of the upper end of the filter medium (17).

## Revendications

1. Dispositif de filtration de fluides, comme de l'huile diesel, chargés d'additions d'eau, comprenant une enveloppe (1) de filtre, qui a une partie (3) principale d'enveloppe et une partie (7) formant couvercle, ainsi qu'une entrée pour du fluide et une sortie (29, 31) pour du fluide épuré et dans laquelle peut être logé au moins un élément (5) filtrant ayant une coiffe (15) d'extrémité inférieure et une coiffe (35) d'extrémité supérieure, élément qui, lors de l'opération de filtration, sépare dans l'enveloppe (1) du filtre, par sa surface filtrante active, un côté (33) brut d'un côté (45) propre, dans lequel, au moyen de la coiffe (15) d'extrémité inférieure, l'élément (5) filtrant peut être fixé à un logement (13) d'élément de l'enveloppe (1) du filtre, dans lequel, pendant le fonctionnement du filtre, il s'établit une hauteur de niveau du fluide dans l'enveloppe (1) du filtre, qui délimite un volume de fluide dans lequel l'élément (5) filtrant plonge, dans lequel un milieu (17) filtrant de l'élément (5) filtrant peut, lors de l'opération de filtration, être traversé du côté (33) extérieur brut à la cavité (45) intérieure du filtre formant le côté propre, dans lequel, en amont de la sortie (29, 31) pour du fluide, est monté, à une extrémité inférieure de la partie (3) principale de l'enveloppe (1) du filtre, un dispositif (63) formant barrière, de manière à obtenir un agrandissement de la hauteur de niveau dans l'enveloppe (1), de sorte que l'élément (5) filtrant plongeant dans le volume de filtre peut être traversé par le filtre sur une surface filtrante agrandie, le dispositif formant barrière ayant, en liaison avec la sortie (29, 31) du fluide, un tuyau (63), dont l'ouverture (65) peut, pour une hauteur de niveau donnée à l'avance par la position de l'ouverture (65), être débordée par du fluide, le dispositif (63) formant barrière étant disposé dans la cavité (45) de filtre de l'élément (5) filtrant, dans laquelle (45) est disposé, entre le milieu (17) filtrant agissant de manière à coaguler l'eau entraînée par l'huile diesel et le tuyau (63), un tamis (47) hydrophobe, de manière à former, entre celui-ci et le milieu (17) filtrant, un espace (49) de séparation, dont de l'eau, qui a été séparée par coalescence, s'écoule par un passage (51) de la coiffe d'extrémité vers un espace (25) collecteur d'eau, **caractérisé en ce que** le dispositif (63) formant barrière fait partie de l'élément (5) filtrant pouvant être logé dans l'enveloppe (1) et **en ce que** l'élément (5) filtrant s'appuie dans sa position de fonctionnement par sa coiffe (35) d'extrémité supérieure sur la partie (7) formant couvercle.

2. Dispositif de filtration suivant la revendication 1, **caractérisé en ce qu'**un tuyau (63) est prévu sous la forme d'un tuyau perforé ou d'un tuyau à membrane.

3. Dispositif de filtration suivant la revendication 1 ou 2, **caractérisé en ce que** la coiffe (15) d'extrémité forme, sous la forme d'un cylindre creux central coaxial à l'axe de la cavité (45) de filtre, un espace (57) pour du fluide, prolongeant la cavité (45) du filtre vers la sortie (31) du fluide, cylindre creux qui est prolongé par le tuyau (63) s'étendant dans la cavité (45) du filtre coaxialement à l'axe vertical et en liaison avec étanchéité avec l'espace (57) pour du fluide.

4. Dispositif de filtration suivant l'une des revendications précédentes, **caractérisé en ce que** le tuyau (63) s'étend à distance du côté intérieur du tamis (47) hydrophobe jusqu'à la région de l'extrémité supérieure du milieu (17) filtrant.
